(19) Europäisches Patentamt
European Patent Office
Office européen des brevets

(11) Publication number: **0 490 954 B1**

# (12) EUROPEAN PATENT SPECIFICATION

(45) Date of publication of patent specification: **12.04.95**

(51) Int. Cl.$^6$: **C09D 11/10**, C09D 177/00

(21) Application number: **90913508.9**

(22) Date of filing: **07.09.90**

(86) International application number:
**PCT/GB90/01389**

(87) International publication number:
**WO 91/03523 (21.03.91 91/07)**

The file contains technical information submitted after the application was filed and not included in this specification

## (54) COATING COMPOSITION COMPRISING FLUORINE-CONTAINING POLYAMIDE.

(30) Priority: **07.09.89 GB 8920238**

(43) Date of publication of application:
**24.06.92 Bulletin 92/26**

(45) Publication of the grant of the patent:
**12.04.95 Bulletin 95/15**

(84) Designated Contracting States:
**DE FR GB**

(56) References cited:
**EP-A- 0 156 368**
**DE-A- 1 520 931**

**Patent Abstracts of Japan, Vol 7, No 252, C194, abstract of JP 58-138759, publ 1983-08-17**

**Patent Abstracts of Japan, Vol 11, No 30, C400, abstract of JP 61-200176, publ 1986-09-04**

(73) Proprietor: **Coates Brothers PLC**
**Cray Avenue**
**St. Mary Cray**
**Orpington**
**Kent BR5 3PP (GB)**

(72) Inventor: **BATTERSBY, Graham, Charles**
**2 The Croft**
**Leybourne**
**Maidstone**
**Kent ME19 5OD (GB)**
Inventor: **DARBY, Paul, Richard**
**140 Cyfartha Street**
**Roth**
**Cardiff DN33 2HB (GB)**
Inventor: **HADAWAY, Andrew, Robert**
**17 Wybridge Close**
**Lordswood**
**Chatham**
**Kent ME5 8RW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

Inventor: **LEONARD, Michael, William**
**3 Leconsfield Close**
**Tonbridge**
**Kent TN9 2OU (GB)**

(74) Representative: **Lamb, John Baxter**
**MARKS & CLERK,**
**57-60 Lincoln's Inn Fields**
**London WC2A 3LS (GB)**

## Description

This invention is concerned with improvements in and relating to coating compositions. More particularly the invention is concerned with coating compositions, especially printing inks and like compositions which, on application to a substrate, give a coating having improved surface characteristics such as resistance to blocking.

Basically, a coating composition in accordance with the invention comprises a film-forming resinous component together with a liquid carrier therefor (in which the resinous component may be dissolved or suspended), in which composition the film-forming resinous component contains a film-forming polyamide containing fluorine atoms together with another film-forming resinous material.

As is well-known, polyamides are obtained by the reaction (polycondensation) of a polycarboxylic acid component (generally comprising one or more dicarboxylic acids) with a polyamine component generally comprising one or more diamines. Polyamides may also be obtained, in whole or in part, from amino acids. In order to control the molecular weight of the final polyamide, monofunctional reactive species, such as monocarboxylic acids and/or monoamines, are commonly employed as part of the reaction mixture. The fluorinated polyamides used in accordance with the invention may contain fluorine atoms derived from one or more of the above reactants (e.g. polycarboxylic acid, monocarboxylic acid, polyamine, monoamine or amino acid). Alternatively, the fluorine atoms may be introduced by the reaction, during or after polycondensations, of a polyamide containing reactive groups (e.g. amino, hydroxyl or carboxyl groups) with a compound containing fluorine atoms and a complementary reactive group. In any event, the fluorine is preferably introduced into the polyamide (during or after polycondensation) as the substituent element in perfluorohydrocarbon groups forming a part of one or more reactive species. Such perfluorohydrocarbon groups may, for example, be represented by the formula:

$C_n H_m F_{m'}$ -

[in which n is an integer from 1 to 24, m is 0 or an integer, m' is an integer (preferably greater than m), and the sum of m and m' is 2n + 1].

The polyamides for use in accordance with the invention are those derived from, as a part at least of the polycarboxylic acid component, polymeric fatty acids (so-called "dimer acids"). The polymeric fatty acid will generally be a polymer, of mixture of polymers, of fatty acids containing 8 to 24 carbon atoms. The polymerisation of fatty acids, which may perhaps be better termed an oligomerisation, is a well-established process generally leading to mixtures of the materials comprising unchanged monomer together with dimer, trimer and higher polymers. A typical polymerisation process involves polymerising ethylenically unsaturated fatty acids, such as oleic or linoleic acids, or mixtures thereof such as tall oil fatty acids, at elevated temperatures in the presence of clay catalysts. Such a polymerisation typically gives a product containing up to 20% by weight of starting monobasic acid (monomers), from 60 to 80% by weight of dibasic acid (dimer) and up to 35% by weight of tribasic and higher acids (trimer and higher oligomers). In view of the relatively high proportion of the dibasic acid or dimer, polymeric fatty acids are generally referred in the art as "dimer acids" and will, for convenience, be so referred to hereinafter. Polyamides derived from dimer acids are, of course, also derived from polyamine components, especially aliphatic diprimary diamines. such as may be represented by the formula:

$H_2 N. C_pH_{2p} .NH_2$

(in which p is an integer of from 2 to 20). Typical examples of such diprimary diamines include ethylene diamine and hexamethylene diamine. Whilst the fluorine content in a polyamide derived from a dimer acid may be introduced from the polyamine component it is more preferably produced from a dicarboxylic acid component (other than the dimer acid) a monocarboxylic acid component or a monoamine component, especially a monocarboxylic acid component, containing fluorine atoms, e.g. containing a perfluorohydrocarbon group as described above.

Thus, and in accordance with the invention, the fluorine-containing polyamide is one derived from (I) an acid component comprising one or more polymeric fatty acids together with, optionally, one or more other dicarboxylic acids and/or one or more aliphatic monocarboxylic acids; and (II) an amine component comprising one or more polyamines and, optionally, one or more monoamines; in which the dicarboxylic acids (other than polymeric fatty acids), aliphatic monocarboxylic acids, polyamines or monoamines comprise fluorinated compounds. Alternatively, fluorine may be introduced into such a polyamide from a monofunctional acid other than a monocarboxylic acid, namely a sulphonic acid.

Another preferred class of film-forming polyamides comprises water-soluble polyamides derived from an aromatic dicarboxylic acids, diamines and monoalkanolamines (e.g. as described in EP-A-0230014, EP-A-0326646, EP-A-0326647 and EP-A-0326648). In the case of such polyamides the fluorine atoms are preferably introduced as substituents of perfluorohydrocarbon groups present in the carboxylic acid.

As noted above, fluorinated polyamides for use in accordance with the invention may also be prepared by reaction of a reactive preformed polyamide with a fluorinated component containing a complementary reactive group. Thus, for example, polyamides having an excess of amine groups may be reacted with a perfluorinated mono-epoxy compound.

In addition fluorine may be introduced ito a preferred polyamide by a group polymerization reaction with an ethylenically unsaturated compound such as a perfluoromethacrylate.

The compositions of the invention comprise another film-forming resinous material in addition to the fluorinated polyamide. Examples of other such resinous materials include poly(meth)acrylates and copolymers of vinylic monomers; cellulose derivatives such as nitrocellulose and cellulose acetate propionate, polyvinyl butyrate and non-fluorinated polyamides.

Suitable liquid carriers for use in the compositions of the invention are volatile organic solvents or diluents such as industrial methylated spirits, ethyl acetate, isopropyl alcohol, isopropyl acetate, butyl acetate, toluene, methylethyl ketone, n-propanol, n-propyl acetate and glycol ethers. Water may also be used as a carrier or diluent and in this case the fluorine-containing polyamide should preferably be a water-soluble or water-dispersible polyamide and any other resinous binder should also preferably be water-soluble or water-dispersible and thus may comprise acrylic polymers, polyamides, emulsified nitrocellulose, polyesters, vinyl polymers etc.

The fluorinated polyamide may comprise, for example, from 1 to 70% by weight of fluorine but the amount of fluorine present in the polyamide will depend, among other things, upon the desired level of fluorine in the final composition and the amount of fluorinated polyamide in that composition. Generally speaking, it is preferred that a finished coating obtained from a composition of the invention contain from 0.05 to 40, preferably 0.1 to 20, % by weight of fluorine.

The weight ratio of fluorinated polyamide to other film-forming resin will also, of course, depend, inter alia, on the desired total fluorine content of the film-forming component and the fluorine content of the fluorinated polyamide. However, it has been found convenient to use the fluorinated polyamide in amounts of 0.1 to 80% preferably 0.5 to 40% by weight, based on the total resinous components of the composition.

Compositions of the invention may also contain other ingredients, especially such as pigments or dyestuffs, preferably the former.

In order that the invention may be well understood the following examples are given by way of illustration only. Examples 1, 2, 3, 4, 5, 6, 7, 8, 9 and 10 illustrate the preparation of fluorinated polyamides for use in the compositions of the invention.

Example 1

A polyamide was prepared from the following ingredients.

| | |
|---|---|
| dimer fatty acid | 62.42 parts |
| propionic acid | 6.21 parts |
| $C_8F_{17}C_2H_4$ COOH | 6.27 parts |
| monomeric fatty acid | 9.73 parts |
| hexamethylene diamine | 9.41 parts |
| ethylene diamine | 5.96 parts |
| | 100.00 parts |

The acids were charged to a reaction vessel fitted with nitrogen sparge and a stirrer. 0.5 parts of phosphoric acid were added as catalyst and silicone antifoam added as required to combat foaming during processing.

The temperature was raised to 60°C and the diamines were added slowly, to prevent excessive exotherm. The temperature was then raised to 130°C and held there for 1 hour.

The temperature was then raised to 180 - 190°C and held until the desired acid and amine value are obtained (below 6mg KOH/g).

The procedure of Example 1 is repeated using the following fluorinated acids in place of $C_8F_{17}C_2H_4COOH$ and in equivalent amounts; $C_8F_{17}COOH$, $C_{10}F_{21}C_2H_4$ s $CH_2$ COOH and $C_{10}F_{21}C_2H_4$ S

$CH_2$ $CH_2$ COOH.

Example 2

A polyamide was produced, following the procedure of Example 1, from the following :-

| | |
|---|---|
| dimer fatty acid | 53.60 parts |
| hexafluoroglutaric acid | 9.19 parts |
| undecanoic acid | 6.00 parts |
| monomer fatty acid | 15.99 parts |
| phosphoric acid | 0.01 parts |
| hexamethylene diamine | 9.19 parts |
| ethylene diamine | 5.82 parts |
| | 100.00 parts |

Alternatively, an equivalent amount of the diacid:

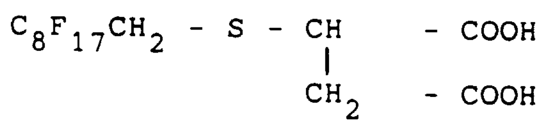

may be used in place of the hexafluoroglutaric acid.

Example 3

A polyamide was prepared, following the procedure of Example 1, from the following:

| | |
|---|---|
| dimer fatty acid | 64.11 parts |
| propionic acid | 9.06 parts |
| $C_6F_{13}C_2H_4SO_3H$ | 11.03 parts |
| hexamethylene diamine | 9.67 parts |
| ethylene diamine | 6.13 parts |
| | 100.00 parts |

Example 4

A polyamide was prepared from the following:-

| | |
|---|---|
| dimer fatty acid | 57.44 parts |
| propionic acid | 5.46 parts |
| N-ethyl perfluoctyl sulphonamide ethanol | 30.14 parts |
| [$C_8F_{17}$ O $SO_2$ N ($C_2H_4$) -$C_2H_4$ OH] ethylene diamine | 6.75 parts |
| phosphoric acid | 0.01 parts |
| | 100.00 parts |

All components charged into a reaction vessel as described in Example 1, and were then heated to 130°C under $N_2$ and held at 130 - 140°C for 1/2 hour. These are then heated at 210°C and held to an acid value less than 8 mg KOH/g.

Example 5

A polyamide was prepared, following the procedure of Example 1, from the following:-

| | | |
|---|---|---|
| Part A | dimer fatty acid<br>propionic acid<br>antifoam<br>catalyst | 60.70 parts<br>3.40 parts<br>trace<br>trace |
| Part B | hexamethylene diamine<br>ethylene diamine<br>$C_8F_{17}CH_2CH_2NH_2$ | 5.20 parts<br>3.30 parts<br>27.40 parts |
| | | 100.00 parts |

Example 6

A polyamide resin was prepared from;-

Reactive amine terminated

| | |
|---|---|
| polyamide resin<br>(Versamid 140) | 25 parts |
| 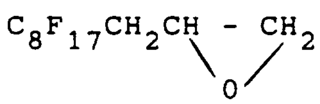 | 75 parts |
| | 100 parts |

To the Versamid resin at 70°C was added dropwise the fluorinated epoxide (Zonyl TE). The mixture was then heated to 180°C until the Amine value as below ten and the epoxide value was also below ten.

Example 7

A polyamide was prepared from the following:-

| | | |
|---|---|---|
| Part A | fatty dimer acid<br>epropionic acid<br>$C_8F_{17}C_2H_4COOH$<br>antifoam<br>catalyst | 180.12 parts<br>6.43 parts<br>108.04 parts<br>trace<br>trace |
| Part B | hexamethylene diamine<br>ethylene diamine | 9.43 parts<br>22.50 parts |
| Part C | carboxylic acid (westvaco acid WV 1550) | 85.50 parts<br>340.02 parts |

The procedure of Example 1 was repeated, using components A and B, up to the step of heating at 130°C for 1 hour. In this case the mixture was heated for 1 hour at 140°C and component C then added. The whole was then heated at 140°C until the acid value was greater than 50 mg K0H/g and the amine value less than 7 mg K0H/g.

The polyamide was used to produce an emulsified polyamide, from the following

| | |
|---|---|
| Polyamide from above | 39 parts |
| n-propanol | 29 parts |
| Water | 29 parts |
| Ammonia (aqueous) | 3 parts |
| | 100 parts |

The polyamide was dissolved in the n-propanol with stirring. The ammonia was added to the water until pH10 was obtained. This solution was then added to the polyamide solutioned in solvent with continuous stirring. Additional ammonia was then added to maintain pH10.

Example 8

A polyamide having fluorine grafted thereon was prepared from:-

| | |
|---|---|
| dimer fatty acid based polyamide (Mn5000) | 20 parts |
| n-propanol | 350 parts |
| per-fluoromethacrylate | 10 parts |
| benzoyl peroxide | 0.5 parts |
| | 380.5 parts |

To a tall oil dimer acide polyamide dissolved in n-propanol was added 5% of a fluorinated methacrylate monomer. This was refluxed in the presence of a peroxide initiator for 4 hours.

Optionally acrylic acid may be included with the fluorine monomer to produce a water soluble acrylic grafted polyamide (see USP 4870 139).

Example 9

FORMULATION I

| | | |
|---|---|---|
| Part A | fatty dimer acid | 49.1 parts |
| | forafac 1057 | 18.2 parts |
| Part B | eriethylene tetramine | 32.7 parts |
| | | 100.0 parts |

The amine was slowly added to the acid at 70 ° C. This was fixed at 130 ° C then heated slowly to 180 ° C and the water generated removed by distillation. Once the amine value was below 400 mg KOH/g the mixture was cooled to 160 ° C and poured.

FORMULATION II

| | | |
|---|---|---|
| Part A | Polyamide from formulation I | 45 parts |
| Part B | Epikote 828 (epoxy resin) | 55 parts |
| | | 100 parts |

To the polyamide at 80 ° C was slowly added the epoxy resin over 1 hour. The mixture was heated slowly until the epoxy and amine values were below 20 mg KOH/g.

Example 10

A polyamide was prepared from the following:-

| | |
|---|---|
| polyamine (Jeffamine D230) | 48.94 parts |
| antifoam | Trace |
| phosphoric acid (85% in water) | 1.00 parts |
| $C_8F_{17}C_2H_4COOH$ | 8.54 parts |
| isophthalic acid | 27.02 parts |
| adipic acid | 14.50 parts |
| | 100.00 parts |

The reaction vessel was charged with the polyamine, phosphoric acid and antifoam, fitted with nitrogen sparge and heated to 100 °C under reflux.

The acids were added at 100'C and the temperature raised to 150 °C. This temperature was held for 30 minutes, still under reflux.

After 30 minutes the apparatus was converted to distillation and the temperature raised to 180 °C. This temperature was maintained until an amine value of 4 mg KOH/g had been achieved. The resin was discharged at 160 °C.

Example 11

A coating composition now prepared from the following:

| | | |
|---|---|---|
| polyvinyl butyral resin (mowital B30H ex Hoechst) | 5.8 parts) | A |
| erethane polymer (urithane 671s ex CVP) | 3.6 parts) | |
| cyclic ketone resin | 4.7 parts) | |
| N-Ethyl p Toluene Sulphonamide Plasticiser | 2.0 parts) | |
| IMS | 41.25 parts) | |
| ethyl acetate | 38.35 parts) | |
| polyethyleneimine | 1.00 parts | B |
| fluorinated polyamide (from Example 1) | 3.30 parts | C |
| | 100.00 parts | |

Part 'A' was stirred on a Silverson high speed disperser until dissolved. Parts B and C were subsequently stirred in separately until a clear solution was obtained.

Example 12

A coating composition was prepared from the following:-

| | | |
|---|---|---|
| water | 25.9 parts) | A |
| Bevaloid 999 | 0.4 parts) | |
| Joncryl 682 (ex Spechem) -(watersoluble polyacrylate) | 42.5 parts) | |
| ammonia solution (aq) (25%) | 11.9 parts) | |
| isopropanol | 4.3 parts) | |
| water | 5.3 parts) | B |
| fluorinated polyamide (Example 10) | 7.8 parts) | |
| IMS | 1.5 parts) | |
| mono ethanolamine | 0.4 parts) | |
| | 100.0 parts | |

Parts A and B were made separately on a Silverson high speed disperser and subsequently blended:

Part A The Joncryl resin was added gradually to the blend of water, antifoam, isopropanol and

ammonia and stirred until the solution was clear and the pH = 10.

Part B The fluorinated polyamide was added gradually to the blend of water, IMS and monoethanolamine and stirred until the solution was clear and the pH = 9.0.

The compositions of example 11 and 12 were each diluted with i-propanol and water respectively until their flow times measured through a Zahn No. 2 cup were 23 seconds (at 25 °C). Both lacquers were then printed onto a proprietary coextruded film (Shorko P) and dried with a hairdrier.

Prints of the lacquers were subsequently placed face to face with a rubber based coldseal cohesive, applied to the reverse side of Shorko P, at a film weight of 3 - 3.5 g/$m^2$. Prints were blocked at 25 tonnes force in a Specac blocking tester at 25 °C for 24 hours.

Notes

1 Measurements for release and bonds were done on a JJ Lloyd TSK tensile test apparatus under the following conditions:-

| | |
|---|---|
| Cross head speed:- | 250 mm $min^{-1}$ |
| Extension :- | 200 mm |
| Load Cell :- | 5 N |

2 Cohesive Bonds were prepared on a Sentinel Heat Sealer under the following conditons:-

| | |
|---|---|
| Pressure :- | $3.45 \times 10^5$ Pa(50 psi) |
| Temperature :- | Ambient |
| Dwell time :- | 0.5 seconds |

## Claims

**1.** A coating composition comprising a film-forming resinous component together with a liquid carrier therefor, in which composition the film-forming resinous component contains a film-forming polyamide containing fluorine atoms together with another film-forming resinous material; the fluorine-containing polyamide being one derived from (I) an acid component comprising one or more polymeric fatty acids together with, optionally, one or more other dicarboxylic acids and/or one or more aliphatic monocarboxylic acids; and (II) an amine component comprising one or more polyamines and, optionally, one or more monoamines; in which one or more of the dicarboxylic acid (other than polymeric fatty acids), aliphatic monocarboxylic acid, polyamine or monoamine is a fluorinated compound.

## Patentansprüche

**1.** Beschichtungszusammensetzung, die eine filmbildende, harzartige Komponente, zusammen mit einem flüssigen Träger dafür aufweist, in welcher Zusammensetzung die filmbildende, harzartige Komponente ein filmbildendes, Fluoratome enthaltendes Polyamid zusammen mit einem anderen filmbildenden, harzartigen Material enthält; wobei das fluorhaltige Polyamid abgeleitet ist von (I) einer, eine oder mehrere polymere Fettsäuren zusammen mit wahlweise einer oder mehreren anderen Dicarbonsäuren und/oder einer oder mehreren aliphatischen Monocarbonsäuren aufweisenden Säurekomponente; und von (II) einer, ein oder mehrere Polyamine und wahlweise ein oder mehrere Monoamine aufweisenden Aminkomponente; in welcher von Dicarbonsäure (außer polymere Fettsäure), aliphatischer Monocarbonsäure, Polyamin oder Monoamin eine oder mehrere eine fluorierte Verbindung sind.

## Revendications

**1.** Composition de revêtement comprenant une composante résineuse, formant un film, avec un liquide pour le transport de celle-ci, dans laquelle composition la composante résineuse, formant un film, contient un polyamide, formant un film, contenant des atomes de fluor ainsi qu'un autre matériau résineux, formant un film; le polyamide contenant du fluor étant dérivé (I) d'un composant acide comprenant un ou plusieurs acides gras polymères ainsi qu'optionnellement, un ou plusieurs autres

acides dicarboxyliques et/ou un ou plusieurs acides monocarboxyliques aliphatiques; et (II) un composant aminé comprenant une ou plusieurs polyamines et, optionnellement, une ou plusieurs monoamines; dans laquelle un ou plusieurs des acides dicarboxyliques (autres que les acides gras polymères), des acides monocarboxyliques aliphatiques, des polyamines ou des monoamines est un composé fluoré.